# EUROPEAN PATENT APPLICATION

(11) **EP 2 672 657 A1**
(43) Date of publication of application: **11.12.2013**
(21) Application number: 12170816.8
(22) Date of filing: 05.06.2012
(51) Int. Cl.: H04L 12/24, H04L 12/40

(54) **DEVICE AND METHOD FOR VERIFYING COMMUNICATION REDUNDANCY IN AN AUTOMATION NETWORK**

(71) Applicant: ABB Research Ltd., 8050 Zürich (CH)
(72) Inventor: Sivanthi, Thanikesavan, 5413 Birmenstorf (CH); Goerlitz, Otmar, 5442 Fislisbach (CH); Hadeli, Hadeli, 5400 Baden (CH)
(74) Representative: ABB Patent Attorneys

(57) **Abstract**

The invention relates to a verification device (20) for automatically verifying communication redundancy in a high availability automation network (10, 11). The high availability automation network (10, 11) comprises a plurality of communication links redundantly arranged between ports of a plurality of network nodes (1-7). The verification device (20) comprises: a node collector (21) configured to collect inter-port connectivity information from the network nodes (1-7) of the high availability automation network (10, 11), a topology generator (22) configured to determine a network topology of the high availability automation network (10, 11) using the collected connectivity information of the network nodes (1-7), and a verification module (23) configured to verify the communication redundancy in the high availability automation network (10, 11) by analyzing the determined network topology of the high availability automation network (10, 11) with regards to redundancy rules.

## Description

### FIELD OF THE INVENTION

The present invention relates to a device and a method for verifying communication redundancy in an automation network. Specifically, the present invention relates to a device and a method for automatically verifying communication redundancy in a high availability automation network.

### BACKGROUND OF THE INVENTION

In critical applications such as in vehicle control, drive control or substation automation, communication networks with redundant properties are deployed in order to comply with requirements regarding delay, availability, or reliability, for example. Various redundancy protocols have been designed for the operation of such high availability automation networks. The international standard IEC 62439 defines various redundancy protocols, such as media redundancy protocol (MRP), parallel redundancy protocol (PRP), high-availability seamless redundancy protocol (HSR), cross-network redundancy protocol (CRP), beacon redundancy protocol (BRP), etc.

In a high availability automation network using the parallel redundancy protocol (PRP), the network topology includes network nodes which are attached to two independent local area networks (LAN) which operate in parallel. A source node sends the same frame over both LANs and a destination node receives the frame from both LANs within a certain delay, wherein one of the frames may be discarded. In PRP communication networks, network topologies with a bus topology or with a ring topology are also known.

In a high availability automation network using the high-availability seamless redundancy protocol (HSR), the network topology includes network nodes which have two ports operated in parallel. The network nodes form a ring, wherein one port of a network node is connected to another network node in one direction along the ring and the other port of the network node is connected to yet another network node in the other direction along the ring. The network nodes operate as switching nodes, wherein a frame received on one port is forwarded to the other port. Accordingly, when a source node sends the same frame over both ports, a destination node receives the frame on both ports within a certain delay, wherein one of the frames may be discarded. In HSR communication networks, network topologies using two independent networks or peer coupling of two rings are also known.

A PRP communication network may be connected to a HSR communication network through two so called RedBoxes, which are devices allowing to attach single attached nodes to a redundant network. Moreover, any kind of meshing may be involved in high availability automation networks.

After deploying a high availability automation network, operation according to required redundancy configurations is to be provided and maintained. For example, proper cabling providing the redundant communication links between the network nodes is required.

US 2010/0110904 discloses the identification of an improper cabling of control system devices connected to high availability automation networks of a distributed control system. Messages including a source address and associated device port identification are transmitted from a sending device to a receiving device over redundant networks. The receiving device can determine a connect status indicating whether or not a message has been received on a particular device port, as well as an error event indicating whether or not the device port is associated to the network identified in the received message. By doing so for a least two distinct sending devices, an improper communication path between two devices can be diagnosed and an indication can be produced as to the location or type of the wrong cabling of the end nodes. The method is based on online supervision of messages received by a supervising end node from supervised end nodes.

### DESCRIPTION OF THE INVENTION

It is an objective of the present invention to provide a device and a method for automatically verifying communication redundancy in a high availability automation network, which do not have at least some of the disadvantages of the prior art. In particular, it is an object of the present invention to provide a device and a method for automatically verifying communication redundancy in a high availability automation network which enable detection of errors not only in the cabling of the end devices. In particular, it is an object of the present invention to provide a device and a method for automatically verifying communication redundancy in a high availability automation network which enable detection of errors in a deployed, commissioned high availability automation network, before actual operation of the network starts. In particular, it is an object of the present invention to provide a device and a method for automatically verifying communication redundancy in a high availability automation network which enable detection of errors, without compromising the redundancy provided by the underlying redundancy protocol.

According to the present invention, these objects are achieved through the features of the independent claims. In addition, further advantageous embodiments follow from the dependent claims and the description.

According to the present invention a verification device for automatically verifying communication redundancy in a high availability automation network is provided, the high availability automation network comprising a plurality of communication links redundantly arranged between ports of a plurality of network nodes. The verification device comprises a node collector configured to collect inter-port connectivity information from the network nodes of the high availability automation network, a topology generator configured to determine a network topology of the high availability automation network using the collected connectivity information of the network nodes, and a verification module configured to verify the communication redundancy in the high availability automation network by analyzing the determined network topology of the high availability automation network with regards to defined redundancy rules. Through collection of connectivity information from the network nodes, the generation of a network topology, and the analysis of the network topology with regards to defined redundancy rules, the communication redundancy in the high availability automation network can be verified, in particular with respect to wrongly attached network nodes, wrong connections between independent networks, etc. or with respect to other redundancy rules or constraints which are specific to the redundancy protocol(s) employed in the high availability automation network.

The present invention works without injecting additional traffic into the network and without using any special supervision logic. Consequently, the method can also be used during network operation.

In an embodiment, the node collector is configured to collect the connectivity information from the network nodes of the high availability automation network using link layer discovery protocol (LLDP), simple network management protocol (SNMP), and/or a message information base (MIB). Accordingly, connectivity information can be collected through widely deployed protocols and/or information databases.

In an embodiment, the verification device is configured to verify communication redundancy in a high availability automation network operated according to the parallel redundancy protocol, the high-availability seamless redundancy protocol, the media redundancy protocol, the cross-network redundancy protocol, and/or the beacon redundancy protocol. Hence, the verification device can be used to verify communication redundancy in a wide variety of currently deployed high availability automation networks.

In an embodiment, the topology generator is configured to determine a network topology which is described according to a list, a table, and/or a network graph. Accordingly, the network topology is described according to formats which can be easily handled.

In an embodiment, the verification module is configured to select a pair of network nodes and to verify using the determined network topology that two independent communication links exist between the pair of network nodes. Through repetition, any pairs of network nodes attached to the high availability automation network can be verified for proper operation.

In an embodiment, the verification module is configured to select a network switch of the high availability automation network and to verify using the determined network topology that the network switch is not connected to multiple independent networks. Through repetition, for any switch of the high availability automation network it can be verified that the switch is not connected to multiple independent networks.

In addition to a device for automatically verifying communication redundancy in a high availability automation network, the invention further relates to a method for automatically verifying communication redundancy in a high availability automation network. The method comprises: collecting inter-port connectivity information of the network nodes of the high availability automation network, determining a network topology of the high availability automation network using the collected connectivity information of the network nodes, and verifying the communication redundancy in the high availability automation network by analyzing the determined network topology of the high availability automation network with regards to defined redundancy rules.

In a variant, the connectivity information of the network nodes of the high availability automation network is collected using link layer discovery protocol, simple network management protocol, and/or a message information base.

In a variant, communication redundancy is verified in a high availability automation network which is operated according to parallel redundancy protocol, high-availability seamless redundancy protocol, media redundancy protocol, cross-network redundancy protocol, and/or beacon redundancy protocol.

In a variant a network topology is determined which is described according to a list, a table, and/or a network graph.

In a variant, a pair of network nodes is selected, and using the determined network topology it is verified that two independent communication links exist between the pair of network nodes.

In a variant, a network switch of the high availability automation network is selected, and using the determined network topology it is verified that the network switch is not connected to multiple independent networks.

In addition to the device and the method for automatically validating communication redundancy in a high availability automation network, the invention further relates to a computer program product comprising computer program code means for controlling one or more processors of a verification device for automatically validating communication redundancy in a high availability automation network. The computer program product is configured to direct the verification device to: collect inter-port connectivity information from the network nodes of the high availability automation network, determine a network topology of the high availability automation network using the collected connectivity information of the network nodes, and verify the communication redundancy in the high availability automation network by analyzing the determined network topology of the high availability automation network with regards to defined redundancy rules.

### BRIEF DESCRIPTION OF THE DRAWINGS

The present invention will be explained in more detail, by way of example, with reference to the drawings in which:
Fig. 1 shows a block diagram illustrating schematically a high availability automation network comprising a plurality of network nodes, wherein the high availability automation network includes two independent networks,
Fig. 2 shows a block diagram illustrating schematically a high availability automation network comprising a plurality of network nodes, wherein the high availability automation network includes a ring topology,
Fig. 3 shows a verification device configured to automatically verify communication redundancy in a high availability automation network,
Fig. 4 shows schematically a PRP high availability automation network comprising four switches,
Fig. 5 shows schematically an open HSR ring of a high availability automation network, and
Fig. 6 shows an exemplary sequence of steps for automatically verifying communication redundancy in a high availability automation network.

### DETAILED DESCRIPTION OF PREFERRED EMBODIMENTS

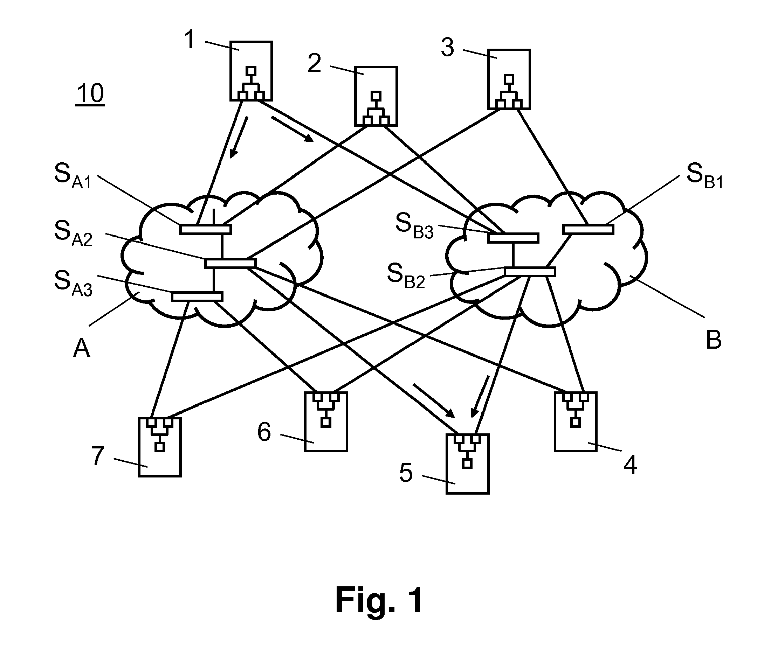

Fig. 1 shows a block diagram illustrating schematically a high availability automation network 10 comprising a plurality of network nodes 1-7, wherein a plurality of communication links between the network nodes 1-7 are provided through independent network A and independent network B. The independent network A comprises switches S_{A1}, S_{A2}, S_{A3} and the independent network B comprises switches S_{B1}, S_{B2}, S_{B3}. The independent networks A, B may be arranged according to any network topology, such as a ring topology, a tree topology, etc. In a variant, the independent networks A, B include a local area network (LAN). Each network node 1-7 has two ports, wherein one port is connected to independent network A and the other port is connected to independent network B. In Fig. 1, a source node 1 and a destination node 5 are shown schematically, wherein the arrows indicate the source node 1 sends data frame through independent network A and a data frame through independent network B to the destination node 5. The destination node 5 receives a data frame through independent network A and a data frame through independent network B, and may discard one of the data frames. In case of failure, congestion, etc. of one of the independent networks A, B, data frames between the network nodes 1-7 may still be transmitted, in particular according to requirements such as delay.

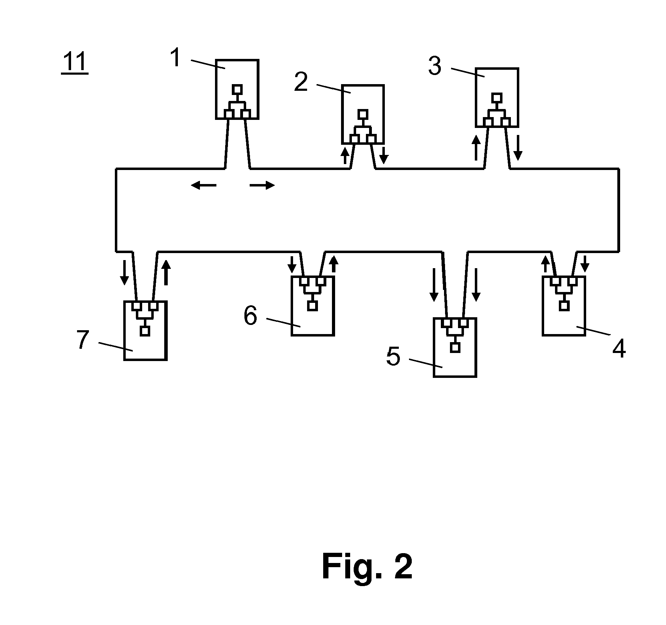

Fig. 2 shows a block diagram illustrating schematically a high availability automation network 11 comprising network nodes 1-7, which are connected in a ring topology. Each network node 1-7 has two ports, wherein one port is connected to a port of a following network node and the other port is connected to a port of a preceding network node in the ring topology. As indicated by arrows in Fig. 2, a source node 1 transmits a data frame through one port in one direction of the ring topology and a data frame on the other port in the other direction of the ring topology. Each network node 1-7 is configured to receive a data frame one port and to transmit the data frame to the other port. As indicated by arrows in Fig. 2, a destination node 5 does not transmit the data frame to the other port, but just receives within a delay on both ports the same data frame, wherein on of the data frames may be discarded. In case of failure, congestion, etc. between two directly connected network nodes along the ring topology, data frames between the network nodes 1-7 may still be transmitted, in particular according to requirements such as delay.

High availability automation networks are employed in automation systems having critical application availability requirements, for example. When commissioning and deploying high availability automation networks, improper interconnection of network elements has to be prevented. During operation of a high availability automation network, required redundancy has to be maintained. Hence, verification of communication redundancy in the high availability automation network is necessary.

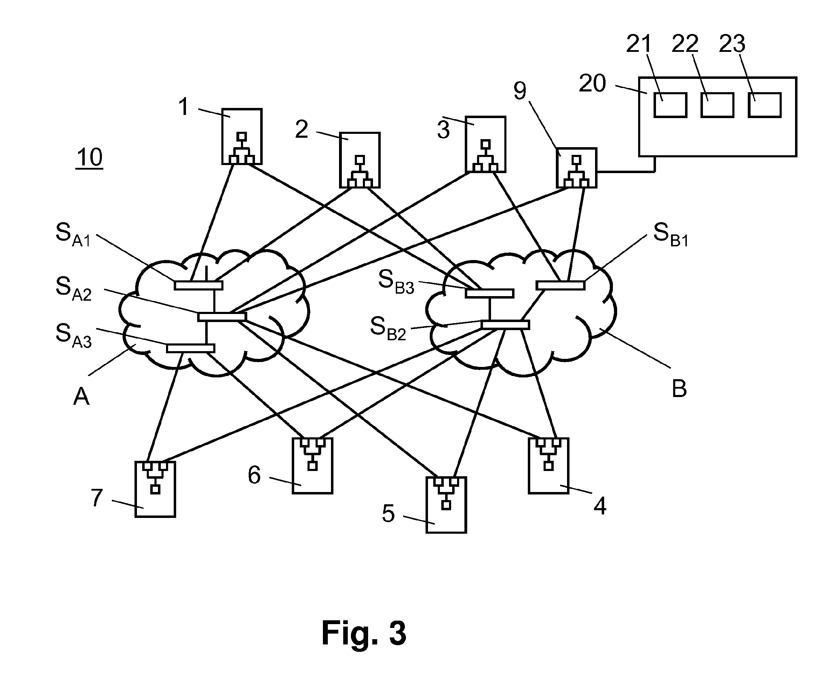

Fig. 3 shows a block diagram illustrating schematically a verification device 20 according to the invention. As an example, the verification device 21 is connected to a high availability automation network 10 according to Fig. 1. However, the verification device 20 is configured to be connected to any communication network 10, 11 with communication redundancy provided by a plurality of communication links redundantly arranged between ports of a plurality of network nodes 1-7.

The verification device 20 includes a node collector 21 configured to collect connectivity information from the network nodes 1-7 of the high availability automation network, specifically, inter-port connectivity information; a topology generator 22 configured to determine a network topology of the high availability automation network 10, 11 using the collected connectivity information of the network nodes 1-7; and a verification module 23 configured to verify proper configuration of the high availability automation network 10, 11 by analyzing the determined network topology of the high availability automation network 10, 11 with regards to defined redundancy rules.

In a variant, which is not shown in Fig. 3, the verification device 20 includes more than one port. In a variant, the verification device 20 is connected to the high availability automation network 10, either by connection to independent network A, through connection to independent network B, or both. In a variant, the verification device 20 is connected in any other manner to a high availability automation network 10, 11.

In an embodiment, as indicated in Fig. 3, the verification device 20 includes a single network port and is connected to the high availability automation network 10 through a RedBox 9 (Redundancy Box), which enables single port network nodes to be connected to a high availability automation network.

In a variant, the (inter-port) connectivity information of the high availability automation network is collected through the link layer discovery protocol (LLDP), which advertises the capabilities and identification information of a network node to other directly network nodes. In an embodiment, the node collector 21 of the verification device 20 is configured to initiate such collection for the network nodes 1-7 accordingly. Each LLDP message includes mandatory TLVs (type, length, and value fields) which identify the port ID (ID: identification) and the chassis ID of the network device sending the LLDP message. The type of information available in the port ID and the chassis ID depends on a port ID subtype field, which typically is the interface name, and the chassis ID subtype field, which typically is the MAC address, of the respective TLVs. In a variant, the information obtained from the LLDP message is used to populate a LLDP MIB (MIB: Management Information Base) of a neighbor node which receives the message. Subsequently, a network node has in its LLDP MIB the information about the remote hosts and their ports which are connected to its local ports. In a variant, in case of IEC 61850, the port ID and chassis ID information is available in the logical node LCCH. In a variant, network nodes operating according to a PRP and/or HSR protocol advertise in their LLDP messages the respective port information and redundancy channel (e.g. independent network A or independent network B in case of PRP). In a variant, the network neighbor figures out to which channel of the PRP or HSR network node it is connected. In particular, LLDP is a one-hop protocol with the immediate network neighbors only. LLDP tracks each port independently without taking into account that the ports may be grouped into a single entity with the same MAC address, for example. Therefore, the TLVs, i.e. management address, port number of remote network node, etc., are transmitted by both ports. Accordingly, LLDP is inherently compatible with HSR. In case of a high availability automation network according to Fig. 1, for example, one MIB per independent network A, B, which may each comprise a LAN, is used; hence, two MIBs per PRP network node are used. Accordingly, in a variant both independent networks A, B are queried.

The node collector 21 of the verification device 20 is configured to collect connectivity information from the network nodes 1-7, specifically inter-port connectivity information, including for example the port ID and chassis ID information. In an embodiment, collection of the connectivity information such as the port ID and chassis ID, which are stored, for example, in MIBs of the network nodes 1-7, is performed using a standardized protocol, for example according to SNMP (SNMP: simple network management protocol) or according to the international standard IEC 61850. In a variant, the node collector 21 is configured to identify all network nodes by broadcasting ping-type messages, wherein the network nodes 1-7 respond to the sender of the broadcast message with their network identity information, for instance their network address. In a variant, the node collector 21 is configured to connect to the network nodes 1-7 collected through the broadcast messages and to obtain from the network nodes 1-7 connectivity information of the network nodes 1-7, for example the port ID and chassis ID.

In an alternative embodiment, instead of broadcasting ping-type messages to obtain the network identity information, the LLDP messages contain optional management address TLVs, which includes network identity information. In an embodiment, the node collector 21 is configured to obtain for example the port ID, chassis ID and management address information from neighbor nodes of a network node 1-7. The management address information is then used to connect and obtain port ID, chassis ID and management address information for the neighbor nodes. In a variant, this procedure is continued until all network nodes 1-7 of the high availability automation network have been explored.

The verification device 20 includes a topology generator 22 configured to determine a network topology of the high availability automation network 10, 11 using the collected connectivity information of the network nodes 1-7. In a variant, a network connectivity model is built using the collected port ID and chassis ID information of the network nodes 1-7. In a variant, the information obtained is consolidated into a network interconnectivity model.

The verification device 20 includes a verification module 23 configured to verify proper configuration of the high availability automation network 10, 11 by analyzing the determined network topology of the high availability automation network 10, 11 with respect to defined redundancy rules. In a variant, a network interconnectivity model is analyzed, wherein a check is carried out for any improper interconnectivity which imperils the redundancy provided by the high availability automation network. Analyzing and checking the determined network topology of the high availability automation network 10, 11 is based on defined redundancy rules which are specific to the redundancy protocol(s) used in the high availability automation network 10, 11.

In a variant, which is to be carried out in case of a PRP high availability automation network according to Fig. 1, for example, checking the redundancy protocol specific rule includes determining if any overlapping network elements exist between independent networks A, B, such as between independent LANs.

In a variant, which is to be carried out in particular in case of a HSR network according to Fig. 2, for example, checking the redundancy protocol specific rule includes determining if a ring topology of the network is closed.

In a variant, which is to be carried out in particular in case of a MPR network, checking the redundancy protocol specific rule includes determining if the first ring port of a media redundancy manager (MRM) is connected to a ring port of a media redundancy client (MRC).

In a variant, which is to be carried out in particular in case of a CRP network, checking the redundancy protocol specific rule includes determining if the port A of a CRP node is attached to LAN B or vice-versa.

In a variant, which is to be carried out in particular in case of a BRP network, checking the redundancy protocol specific rule includes determining if beacon nodes are connected to the top switches.

In a variant, which is to be carried out in particular in case of a DRP network, checking the redundancy protocol specific rule includes determining if each switch node has at least two ring ports connected to the ring network.

In a variant, the verification device 20 includes a complete list of redundancy protocol specific rules or checks, respectively, regarding communication redundancy of high availability automation networks, wherein the verification module 23 is configured to carry out the rule-based checks on the determined network topology or (inter-port) connectivity information in order to verify that communication redundancy of the high availability automation network is not affected, in particular with regard to specific redundancy protocols.

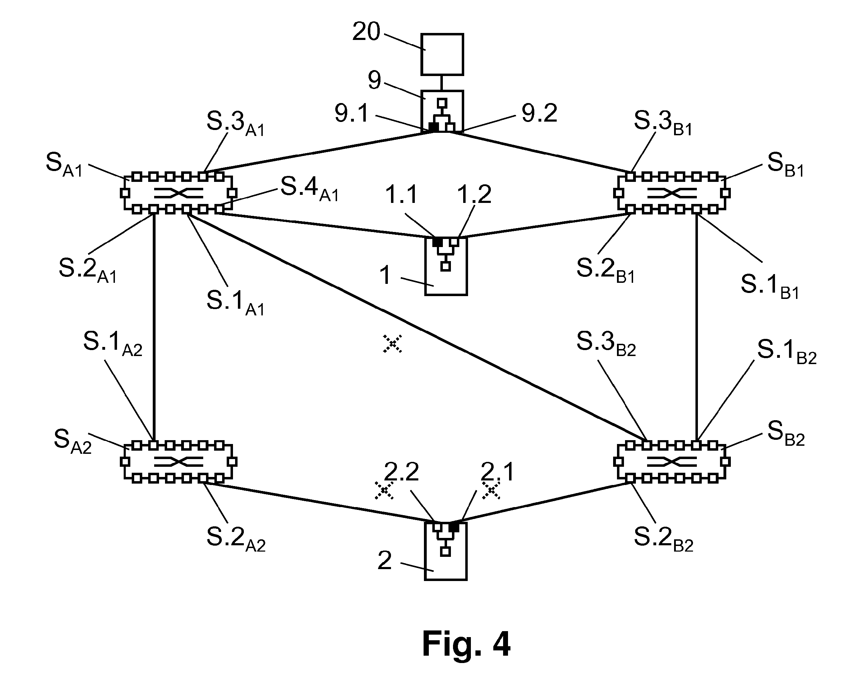

Fig. 4 shows schematically a PRP high availability automation network, namely a high availability automation network operated using the parallel redundancy protocol, comprising four switches S_{A1}, S_{A2}, S_{B1}, S_{B2}, two network nodes 1, 2, a RedBox 9, and a verification device 20 according to the invention. The switches S_{A1}, S_{A2}, S_{B1}, S_{B2} have several ports each. Each network node 1, 2 has two ports. The RedBox 9 has also two ports. The network verification device 20 is connected to the RedBox 9.

As examples of improper or erroneous connections in the high availability automation network according to Fig. 4, an additional cable is arranged by mistake between the switch with reference sign S_{A1} and the switch with reference sign S_{B2}. Moreover, by mistake, the ports of the network node with reference sign 2 are swapped.

In the following table, for all ports of the nodes and switches according to Fig. 4, the port IDs and chassis IDs sent in their respective LLDP messages are listed:

| node/switch | reference sign of port | port ID | chassis ID |
|---|---|---|---|
| S_{A1} | S.1_{A1} | 10 | 00:0A:DC:0F:5A:61 |
| | S.2_{A1} | 8 | 00:0A:DC:0F:5A:61 |
| | S.3_{A1} | 5 | 00:0A:DC:0F:5A:61 |
| | S.4_{A1} | 12 | 00:0A:DC:0F:5A:61 |
| S_{A2} | S.1_{A2} | 2 | 00:0A:DC:0F:5A:64 |
| | S.2_{A2} | 11 | 00:0A:DC:0F:5A:64 |
| S_{B1} | S.1_{B1} | 11 | 00:0A:DC:0F:5A:62 |
| | S.2_{B1} | 7 | 00:0A:DC:0F:5A:62 |
| | S.3_{B1} | 1 | 00:0A:DC:0F:5A:62 |
| S_{B2} | S.1_{B2} | 5 | 00:0A:DC:0F:5A:65 |
| | S.2_{B2} | 7 | 00:0A:DC:0F:5A:65 |
| | S.3_{B2} | 2 | 00:0A:DC:0F:5A:65 |
| 1 | 1.1 | 1 | 00:0A:DC:0F:5A:63 |
| | 1.2 | 2 | 00:0A:DC:0F:5A:63 |
| 2 | 2.1 | 1 | 00:0A:DC:0F:5A:66 |
| | 2.2 | 2 | 00:0A:DC:0F:5A:66 |
| 9 | 9.1 | 1 | 00:0A:DC:0F:5A:60 |
| | 9.2 | 2 | 00:0A:DC:0F:5A:60 |

In the following table, the information which has been collected by the verification device 20, namely by the node collector 21 on the basis of LLDP MIBs of all nodes and switches, is listed:

| node/switch | local port ID | remote port ID | remote chassis ID |
|---|---|---|---|
| 9 | 1 | 5 | 00:0A:DC:0F:5A:61 |
| | 2 | 1 | 00:0A:DC:0F:5A:62 |
| S_{B1} | 1 | 2 | 00:0A:DC:0F:5A:60 |
| | 7 | 2 | 00:0A:DC:0F:5A:63 |
| | 11 | 5 | 00:0A:DC:0F:5A:65 |
| S_{A1} | 5 | 1 | 00:0A:DC:0F:5A:60 |
| | 8 | 2 | 00:0A:DC:0F:5A:64 |
| | 10 | 2 | 00:0A:DC:0F:5A:65 |
| | 12 | 1 | 00:0A:DC:0F:5A:63 |
| 1 | 1 | 12 | 00:0A:DC:0F:5A:61 |
| | 2 | 7 | 00:0A:DC:0F:5A:62 |
| S_{A2} | 2 | 8 | 00:0A:DC:0F:5A:61 |
| | 11 | 2 | 00:0A:DC:0F:5A:66 |
| S_{B2} | 2 | 10 | 00:0A:DC:0F:5A:61 |
| | 5 | 11 | 00:0A:DC:0F:5A:62 |
| | 7 | 1 | 00:0A:DC:0F:5A:66 |
| 2 | 1 | 7 | 00:0A:DC:0F:5A:65 |
| | 2 | 11 | 00:0A:DC:0F:5A:64 |

Accordingly, the network topology of the high availability automation network is formed by the above list.

In a variant, a check is carried out, wherein the check includes determining if the switches of the independent network A do not overlap with the switches of the independent network B. Using the network verification device 20 and starting with independent network A or LAN A, the switches which are reachable from the corresponding port of the RedBox 9 are deduced and collected in a set. In order to identify if a network element is a switch or a network node, for example a query for dotldBaseBridgeAddress OID (object identifier) in BRIDGE MIB is made. If the network element replies to the query with its physical address, then it is switch. The set of switches which are reachable via independent network A or LAN A from the corresponding port of the RedBox 9 is: {S_{A1}, S_{A2}, S_{B2}, S_{B1}}. Subsequently, the set of switches which are reachable via independent network B or LAN B is deduced, which is: {S_{B1}, S_{B2}, S_{A1}, S_{A2}}. However, the intersection of the set of switches reachable through independent network A or LAN A and the set of switches reachable through independent network B or LAN B should result in a null set. In the present example, this is not the case, which implies that the independent network A and the independent network B are overlapping.

In the following, it is supposed that the wrong cable between the switch with reference sign S_{A1} and the switch with reference sign S_{B2} has been identified and removed. According to the example of Fig. 4, the high availability automation network still includes an error, namely due to the swapping of the ports of the network node with reference sign 2. Albeit maintaining redundancy, such port swapping creates accumulation of error messages.

In a variant, a check is carried out, wherein the check includes determining if the set of ports of all network nodes which are reachable through independent network A or LAN A are all LAN A ports only, and the set of all network nodes which are reachable through independent network B or LAN B are all LAN B ports only. The following list includes the set of ports which are reachable from LAN A, which includes the LAN B port of the network node with reference sign 2. Moreover, the list includes the set of ports which are reachable from LAN B, which includes the LAN A port of the network node with reference sign 2. Through analysis of the list, network node with reference sign 2 is identified to have the ports wrongly connected and therefore swapping of the ports is detected.

| node/switch | local port ID | remote port ID | remote chassis ID |
|---|---|---|---|
| 9 | 1 (A) | 5 | 00:0A:DC:0F:5A:61 |
| | 2 (B) | 1 | 00:0A:DC:0F:5A:62 |
| S_{B1} | 1 | 2 (B) | 00:0A:DC:0F:5A:60 |
| | 7 | 2 (B) (OK) | 00:0A:DC:0F:5A:63 |
| | 11 | 5 | 00:0A:DC:0F:5A:65 |
| S_{A1} | 5 | 1 (A) | 00:0A:DC:0F:5A:60 |
| | 8 | 2 | 00:0A:DC:0F:5A:64 |
| | 12 | 1 (A) (OK) | 00:0A:DC:0F:5A:63 |
| 1 | 1 (A) | 12 | 00:0A:DC:0F:5A:61 |
| | 2 (B) | 7 | 00:0A:DC:0F:5A:62 |
| S_{A2} | 2 | 8 | 00:0A:DC:0F:5A:61 |
| | 11 | 2 (B) (ERROR) | 00:0A:DC:0F:5A:66 |
| S_{B2} | 5 | 11 | 00:0A:DC:0F:5A:62 |
| | 7 | 1 (A) (ERROR) | 00:0A:DC:0F:5A:66 |
| 2 | 1 (A) | 7 | 00:0A:DC:0F:5A:65 |
| | 2 (B) | 11 | 00:0A:DC:0F:5A:64 |

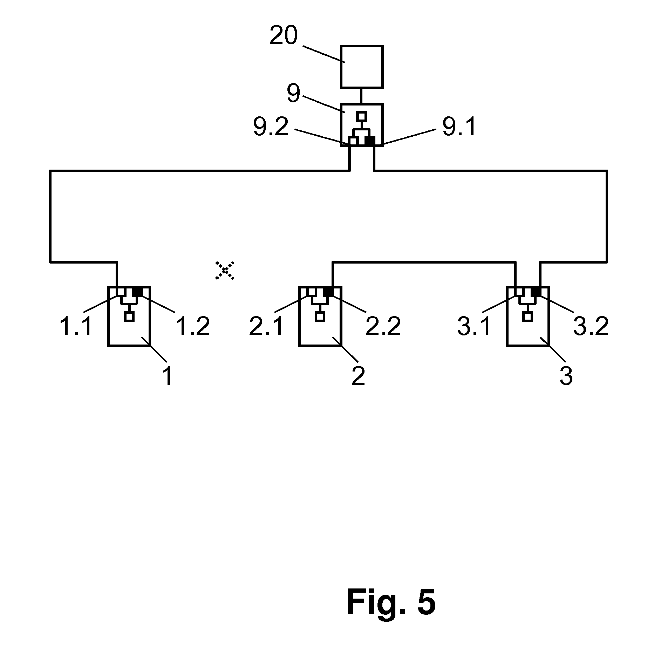

Fig. 5 shows schematically an open HSR ring of a high availability automation network. The verification device 20 is attached through RedBox 9 to the ring, which includes network nodes 1-3.

In the following table, for all ports of the network nodes according to Fig. 5, the port IDs and chassis IDs sent in their respective LLDP messages are listed:

| node | reference sign of port | port ID | chassis ID |
|---|---|---|---|
| 1 | 1.1 | 1 | 00:0A:DC:0F:5A:62 |
| | 1.2 | 2 | 00:0A:DC:0F:5A:62 |
| 2 | 2.1 | 1 | 00:0A:DC:0F:5A:63 |
| | 2.2 | 2 | 00:0A:DC:0F:5A:63 |
| 3 | 3.1 | 1 | 00:0A:DC:0F:5A:64 |
| | 3.2 | 2 | 00:0A:DC:0F:5A:64 |
| 9 | 9.1 | 1 | 00:0A:DC:0F:5A:61 |
| | 9.2 | 2 | 00:0A:DC:0F:5A:61 |

In a variant, a check is carried out, wherein the check includes determining if the HSR ring is closed. In the example according to Fig. 5, the ring was left open between the network node with reference sign 1 and the network node with reference sign 2. According to Fig. 5, the verification device 20 is connected to the HSR ring between the network node with reference sign 1 and the network node with reference sign 3.

The verification device 20, namely the node collector 21 of the verification device 20, is configured to collect connectivity information from the network nodes 1-3, in particular inter-port connectivity information e.g. through the LLDP MIB of the network nodes 1-3, and to determine the network topology, namely by the network generator 22 of the verification device 20, of the high availability automation network. The determined network topology or network interconnectivity model is listed in the following table:

| node/switch | local port ID | remote port ID | remote chassis ID |
|---|---|---|---|
| 9 | 1 | 2 | 00:0A:DC:0F:5A:64 |
| | 2 | 1 | 00:0A:DC:0F:5A:62 |
| 1 | 1 | 2 | 00:0A:DC:0F:5A:61 |
| | 2 | - | - |
| 2 | 1 | - | - |
| | 2 | 1 | 00:0A:DC:0F:5A:64 |
| 3 | 1 | 2 | 00:0A:DC:0F:5A:63 |
| | 2 | 1 | 00:0A:DC:0F:5A:61 |

The check if the ring is open or closed is done by verifying if each node has a neighbor on both of its ports. As indicated in the list above, port 1 of the network node with reference sign 1 and port 2 of the network node with reference sign 2 don not have any neighbors, which indicates that the ring is open between the network node with reference sign 1 and the network node with reference sign 2.

In a variant, through the analysis of the network topology it becomes not obvious which connection is wrong or missing. Depending on the high availability automation network involved, more than one solution may exist to correct the error or mistake, wherein each solution results in a different and correct high availability automation network. In a variant, the solutions are compared to the (inter-port) connectivity information and/or network topology according to the design of the high availability automation network provided as an engineered description file, for example in case of electrical substation automation systems an SCD file, and the originally intended network topology is selected.

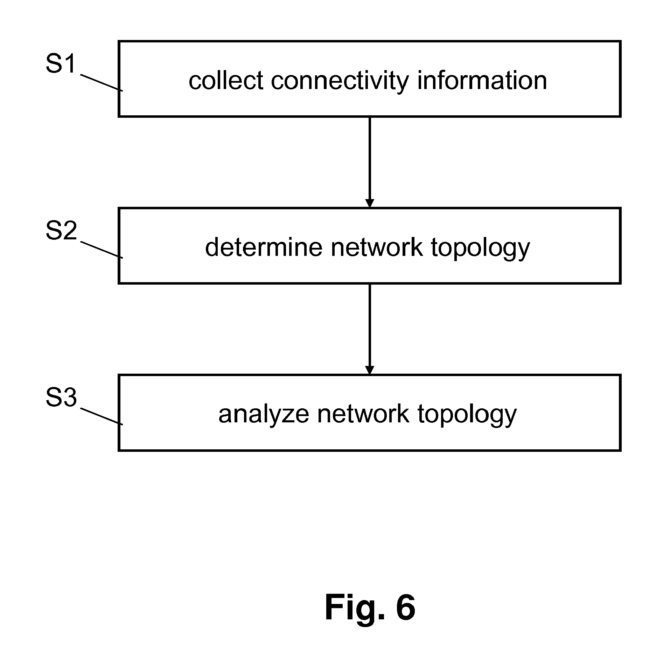

Fig. 6 lists exemplary steps for verifying communication redundancy in a high availability automation network (10, 11). In step S1, connectivity information of the network nodes of the network are collected, particularly, inter-port connectivity information. In step S2, a network topology of the network using the collected connectivity information of the network nodes is determined. In step S3, the communication redundancy in the network is verified by analyzing the determined network topology of the network with regards to defined redundancy rules.

## Claims

1. A verification device (20) for automatically verifying communication redundancy in a high availability automation network (10, 11), the high availability automation network (10, 11) comprising a plurality of communication links redundantly arranged between ports of a plurality of network nodes (1-7), wherein the verification device (20) comprises:
a node collector (21) configured to collect inter-port connectivity information from the network nodes (1-7) of the high availability automation network (10, 11), a topology generator (22) configured to determine a network topology of the high availability automation network (10, 11) using the collected connectivity information of the network nodes (1-7), and
a verification module (23) configured to verify the communication redundancy in the high availability automation network (10, 11) by analyzing the determined network topology of the high availability automation network (10, 11) with regards to redundancy rules.

2. The verification device (20) according to claim 1, wherein the node collector (21) is configured to collect the connectivity information from the network nodes (1-7) of the high availability automation network (10, 11) using one or more of the following: link layer discovery protocol, simple network management protocol, and message information base.

3. The verification device (20) according to claim 1 or 2, wherein the verification device (20) is configured to verify the communication redundancy of a high availability automation network (10, 11) operated according to one or more of the following protocols: parallel redundancy protocol, high-availability seamless redundancy protocol, media redundancy protocol, cross-network redundancy protocol, and beacon redundancy protocol.

4. The verification device (20) according to one of claims 1 to 3, wherein the topology generator (22) is configured to determine a network topology which is described according to one or more of the following: a list, a table, and a network graph.

5. The verification device (20) according to one of claims 1 to 4, wherein the verification module (23) is configured to select a pair of network nodes (1-7) and to verify using the determined network topology that two independent communication links exist between the pair of network nodes (1-7).

6. The verification device (20) according to one of claims 1 to 5, wherein the verification module (23) is configured to select a network switch of the high availability automation network (10, 11) and to verify using the determined network topology that the network switch is not connected to multiple independent networks.

7. A method for automatically verifying communication redundancy in a high availability automation network (10, 11), the high availability automation network (10, 11) comprising a plurality of communication links redundantly arranged between ports of a plurality of network nodes (1-7), wherein the method comprises:
collecting inter-port connectivity information from the network nodes (1-7) of the high availability automation network (10, 11),
determining a network topology of the high availability automation network (10, 11) using the collected connectivity information of the network nodes (1-7), and verifying the communication redundancy in the high availability automation network (10, 11) by analyzing the determined network topology of the high availability automation network (10, 11) with regards to redundancy rules.

8. The method according to claim 7, wherein the connectivity information of the network nodes (1-7) of the high availability automation network (10, 11) is collected using one or more of the following: link layer discovery protocol, simple network management protocol, and message information base.

9. The method according to claim 7 or 8, wherein the communication redundancy is verified in a high availability automation network (10, 11) which is operated according to one or more of the following protocols: parallel redundancy protocol, high-availability seamless redundancy protocol, media redundancy protocol, cross-network redundancy protocol, and beacon redundancy protocol.

10. The method according to one of claims 7 to 9, wherein a network topology is determined which is described according to one or more of the following: a list, a table, and a network graph.

11. The method according to one of claims 7 to 10, wherein a pair of network nodes (1-7) is selected, and wherein using the determined network topology it is verified that two independent communication links exist between the pair of network nodes (1-7).

12. The method according to one of claims 7 to 11, wherein a network switch of the high availability automation network (10, 11) is selected, and wherein using the determined network topology it is verified that the network switch is not connected to multiple independent networks.

13. A computer program product comprising computer program code means for controlling one or more processors of a verification device for automatically validating communication redundancy in a high availability automation network, the high availability automation network (10, 11) comprising a plurality of communication links redundantly arranged between ports of a plurality of network nodes (1-7), wherein the computer program product is configured to direct the verification device to execute the method according to one of claims 7 to 12.
